# EUROPÄISCHE PATENTSCHRIFT

(11) **EP 1 418 001 B1**
(45) Veröffentlichungstag und Bekanntmachung des Hinweises auf die Patenterteilung: **16.05.2007**
(21) Anmeldenummer: 03023447.0
(22) Anmeldetag: 18.10.2003
(51) Int. Cl.: B01J 20/14, B01J 20/34

(54) **Verfahren zur Regenerierung von Filtermitteln, insbesondere Kieselgur**
Method for regenerating filter material, especially diatomaceous earth
Procédé de régénération d'auxiliaire de filtration, plus particulier une terre d'infusoires

(30) Priorität: 07.11.2002 DE 10251792
(43) Veröffentlichungstag der Anmeldung: 12.05.2004
(73) Patentinhaber: Industriebetriebe Heinrich Meyer-Werke Breloh Gmbh & Co. KG, 29633 Münster (DE)
(72) Erfinder: Leussner, Tobias, Dipl.-Ing., 31061 Alfeld (DE); Gock, Eberhard, Prof. Dr.-Ing., 38640 Goslar (DE); Kähler, Jörg, Dr.-Ing., 38678 Clausthal-Zellerfeld (DE)
(74) Vertreter: Hauck Patent- und Rechtsanwälte

(56) Entgegenhaltungen:
- EP-A- 0 253 233
- EP-A- 0 611 249
- WO-A-99/65603
- DE-A- 19 625 481
- DE-B- 1 063 121
- RO-A- 90 973

## Beschreibung

Die Erfindung bezieht sich auf ein Verfahren zur Regenerierung von Filtermitteln, insbesondere Kiegelgur nach dem Patentanspruch 1 und Anlage zur Regenerierung von Filtermitteln nach Patentanspruch 19.

Ein bei der Herstellung von alkoholischen Getränken wie Bier oder Wein und von Fruchtsäften häufig eingesetztes Filtrationsverfahren ist die Anschwemmfiltration unter Verwendung von Kieselgur als Anschwemmmaterial. Hierbei wird auf einem Trägermaterial zunächst eine Schicht aus einer groben Kieselgur mit einer Permeabilität von 600 bis 1000 mDarcy aufgebracht. Diese Schicht dient zur Überbrückung der Öffnungen im Trägermaterial und als Träger der nächsten Grundanschwemmung mit feinerer Gur. Im Verlaufe des Filtrationsprozesses wird ständig zudosiert. Der Prozess kann über Art und Menge der verwendeten Kieselguren und die Trübung des Filtrats gesteuert werden.

Aus dem obigen Grunde fällt in der Getränkeindustrie, insbesondere in Brauereien verbrauchte Kieselgur in erheblichen Mengen an. Die Entsorgung von Kieselgurfilterschlämmen gestaltet sich aufgrund der Anforderungen der TA Siedlungsabfall zunehmend problematisch. Im Sinne einer Kreislaufwirtschaft ist eine möglichst hochwertige Verwertung, d.h. der nahezu vollständige Wiedereinsatz im Filtrationsprozess anzustreben.

Es sind mehrere Versuche bekannt geworden, Filterschlämme zu reinigen und in den Fitrationsprozess zurückzuführen. Ein Verfahren betrifft die Behandlung von Kieselgurschlämmen aus der Bierfiltration mit heißer konzentrierter Natronlauge. Dieses aus DE 36 23 484 A1 oder EP 0 253 233 A2 bekannte Verfahren ist insofern nachteilig, als ein hoher Natronlaugenverbrauch entsteht und damit eine verbundene Aufsalzung des Abwassers durch die erforderliche Neutralisation. Außerdem tritt unter diesen stark alkalischen Bedingungen eine Strukturschädigung von Kieselgur oder auch anderen Filtermitteln auf, was den Wiedereinsatz in der Klarfiltration beeinträchtigt.

Aus der rumänischen Patentschrift RO 90973 B1 ist bekannt geworden, Aluminiumsulfat als Flockungsmittel einzusetzen. Hierbei ist eine hohe Salzfracht im Abwasser zu gewärtigen sowie ein erhöhter Wasserbedarf für das Waschen, was beides äußerst umweltbelastend ist.

In DE 196 25 481 A1 wird ein nasschemisches Reinigungsverfahren vorgeschlagen, bei dem Filterschlamm unter Zusatz von Enzymen und Tensiden gewaschen wird. Diese Zusätze verhindern jedoch eine Umsetzung des Verfahrens in der sensiblen Lebensmittel- und insbesondere Brauindustrie, da Rückstände im Regenerat nicht auszuschließen sind. Bei EP 0 611 249 A1 handelt es sich um ein ähnliches Verfahren, wobei auch hier die Nachteile hoher Enzymrückstände sowie zusätzlich ein hoher Laugeneinsatz zu berücksichtigen sind.

Das zur Zeit technisch angewandte Verfahren zur Regenerierung von Kieselgur ist in der EP 418 847 beschrieben. Es handelt sich um ein thermisches Verfahren, bei dem die organischen Bestandteile bei ca. 750°C zerstört werden. Das Verfahren erweist sich ebenfalls als nicht vollständig befriedigend, da die Struktur der Kieselgur während der Behandlung teilweise zerstört wird. Das Regenerat kann deshalb nur als Zusatz zu frischem Filtermittel eingesetzt werden. Hinzu kommen sehr hohe Energie- und Transportkosten, hoher apparativer Aufwand und eine unvermeidliche Metallanreicherung. Da die thermische Behandlung unter oxidierenden Bedingungen stattfindet, liegen die Metalle zum Teil als leicht lösliche oxidische Verbindungen vor, die bei der erneuten Verwendung der geglühten Kieselgur für die Getränkefiltration in Lösung gehen können.

Aus WO 9965603 A ist bekannt, die Trennung der Schmutzpartikelchen von Filtermittel durch Filtration im in situ-verfahren durchzuführen, d.h. der Filterkuchen wird im vorhandenen Filterapparat gereinigt.

Aus EP-A-0253233 ist bekannt geworden, Filtermittel durch Auflösung der Verunreinigungen mit hohem Laugeneinsatz durchzuführen. Eine Rückgewinnung erfolgt mit Hilfe eines Bandfilters.

Aus EP-A-0611249 ist bekannt geworden, zur Abtrennung der Verunreinigungen von Filtermittel zuerst Enzyme einzusetzen. Ein mehrstufiger Waschprozeß wird im offenen Kreislauf durchgeführt und die Rückgewinnung, Rationierung oder Eindickung der Filtermittel werden mit verfahrenstechnischen Trennapparaten durchgeführt.

Aus DE 1 063 121 B ist ein Reinigungsverfahren von Filtermitteln bekannt. Der Reinigungseffekt erfolgt durch chemische Lösung der Verunreinigungen. Aus DE 196 25 481 A ist bekannt, durch den Zusatz von Tensiden und Enzymen zu einem Filterschlamm organische Verunreinigungen chemisch zu lösen. Mit Hilfe von Tensiden und Enzymen soll ein Ablösen der Hefen erreicht werden sowie Polysaccharide aufzuspalten. Die verwendeten Tenside sind teilweise alkalisch.

In DE 1063121 B wird ein Reinigungsverfahren von Filterhilfsmitteln beansprucht, bei dem die Regenerierung von gebrauchten Filterhilfsmitteln in mehreren hintereinandergeschalteten Hydrozyklonen durchgeführt wird. Dabei ist die Verwendung von Frischwasser in jeder Zyklonstufe notwendig. Ein Gegenstromwaschen ist mit dieser Anlage nicht beschrieben.

Ein grundsätzliches Problem thermischer, d.h. trockener Verfahren ist die Freisetzung gesundheitsschädlicher silikatischer Feinstäube.

Der Erfindung liegt die Aufgabe zugrunde, ein Verfahren zur Regenerierung von Filtermitteln, insbesondere Kieselgur, anzugeben, das ökologisch unbedenklich und technisch einfach durchführbar ist. Es soll den unmittelbaren produktionsintegrierten Wiedereinsatz der Filtermittel ermöglichen.

Diese Aufgabe wird durch die Merkmale des Patentanspruchs gelöst. Eine für des Verfahren angepasste Anlage enthält die Merkmale des Patentanspruchs 19.

Bei dem erfindungsgemäßen Verfahren wird der Filterschlamm in einem schwach alkalischen Milieu suspendiert (konditioniert) und anschließend einem mindestens zweistufigen Waschprozess unterworfen. Jede Stufe schließt ein Aufschlämmen und eine Fest-Flüssig-Trennung ein.

Für die Durchführung des mehrstufigen Waschprozesses wird der konditionierte Filterschlamm kontinuierlich durch eine Hydrozyklon-Kaskade geleitet und Waschflüssigkeit im Gegenstrom zugegeben wird.

Der Filterschlamm wird z.B. in einer Brauerei üblicherweise nass aus dem Filter ausgetragen. Abhängig von der verwendeten Filtertechnik und der Verfahrensweise weist er einen Trockensubstanzgehalt von etwa 20 bis 50% auf. Eine Vorentwässerung ist für das erfindungsgemäße Verfahren nicht notwendig, kann jedoch die Wirksamkeit des Waschprozesses verbessern. Im Konditionier- oder Vorlagegefäß wird der Filterschlamm schonend dispergiert und mit warmem Wasser auf einen Trockensubstanzgehalt von z.B. 20% gebracht. Außerdem wird z.B. mit Hilfe von Natronlauge ein pH-Wert von vorzugsweise 10 eingestellt. Das schwach alkalische Milieu begünstigt hierbei die Dispergierung und teilweise Hydrolisierung der Verschmutzungen. Gleichzeitig wird die Wiederanlagerung der organischen Partikeln durch eine Veränderung der Oberflächenladungen verhindert. Eine Schädigung der Filtermittel tritt bei den verwendeten pH-Werten (bis pH 11) nicht auf.

Der konditionierte Filterschlamm wird beim erfindungsgemäßen Verfahren z.B. kontinuierlich einer Hydrozyklon-Kaskade mit z.B. vier Stufen zugeführt, wobei Waschwasser im Gegenstrom mit einer Temperatur von vorzugsweise 80°C zugegeben wird. Die Verwendung von Warmwasser, das in Brauereien ausreichend aus Wärmerückgewinnungsprozessen zur Verfügung steht, dient dabei einerseits zur Unterstützung der Reinigungswirkung, andererseits wird damit eine Sterilisation des Filtermittels und der Anlage erreicht.

Das Regenerat wird am Unterlauf der letzten Stufe abgezogen und in einem Sammeltank, der insbesondere geschlossen ist, aufgefangen. Das Regenerat hat z.B. einen Feststoffgehalt von 16%. Das Regenerat wird vorzugsweise bei 80°C zum Wiedereinsatz gelagert.

Bei Kieselgur hat das so erzeugte Regenerat einen Restorganikgehalt von unter 1% und weist mit Frischgur vergleichbare Filtrationseigenschaften auf. Eine Anreicherung von wasserlöslichen Metallen in der Kieselgur ist auch bei andauernder Verwendung des regenerierten Filtermittels nicht zu erwarten. Es tritt sogar eine Verminderung eventuell noch vorhandener löslicher Metalle (Fe, Al, Ca, Cu und As) auf, da diese im schwach alkalischen Milieu als kolloidale Hydroxide ausfallen und beim Waschen mit entfernt werden.

Die erste Zyklonstufe der Hydrozyklon-Kaskade enthält neben gelöster sowie in Wasser dispergierter Organik auch Anteile von Feinstoffen, z.B. von Feingur. Dieser Oberlauf kann in einer weiteren Zyklonstufe bzw. Zyklonkaskade nachgereinigt werden. Die danach verbleibenden Filtermittelverluste von z.B. 10 bis 20% sind durchaus erwünscht, um Feinstanteile (z.B. Kieselgurbruchstücke und Abrieb) zu entfernen und damit die Filtrationseigenschaften des Regenerats zu verbessern.

Das Abwasser wird zur Vorbehandlung vorzugsweise in einem Eindicker aufgefangen. Darin können durch Ansäuern auf einen pH-Wert <5 etwa 50% der ausgewaschenen Organik sowie gleichzeitig die im Abwasser verbliebenen Filtermittelanteile ausgeflockt und sedimentiert werden. Der anfallende hochorganikhaltige Schlamm kann zur Biogaserzeugung verwertet werden. Das restliche Abwasser wird der üblichen Behandlung (biologischer CSB- und Stickstoffabbau) zugeführt.

Es ist möglich, durch gezielte Sedimentation des gesammelten Regenerates eine Grobfraktion zu gewinnen, die beim nächsten Filtrationszyklus zur Voranschwemmung verwendet wird. Das übrige Regenerat wird für die laufende Dosierung eingesetzt, wobei die entstandenen Verluste im Dosiergefäß durch frische Filtermittel ergänzt werden. Die meist im Filtermittel enthaltenen Stabilisierungsmittel (beispielsweise Kieselgele) können durch den Waschprozess teilweise regeneriert werden, sodass nur eine geringe Zugabe von Frischmaterial erforderlich ist.

Das erfindungsgemäße Verfahren wird anhand eines in einer Zeichnung dargestellten Ausführungsbeispiels näher erläutert.

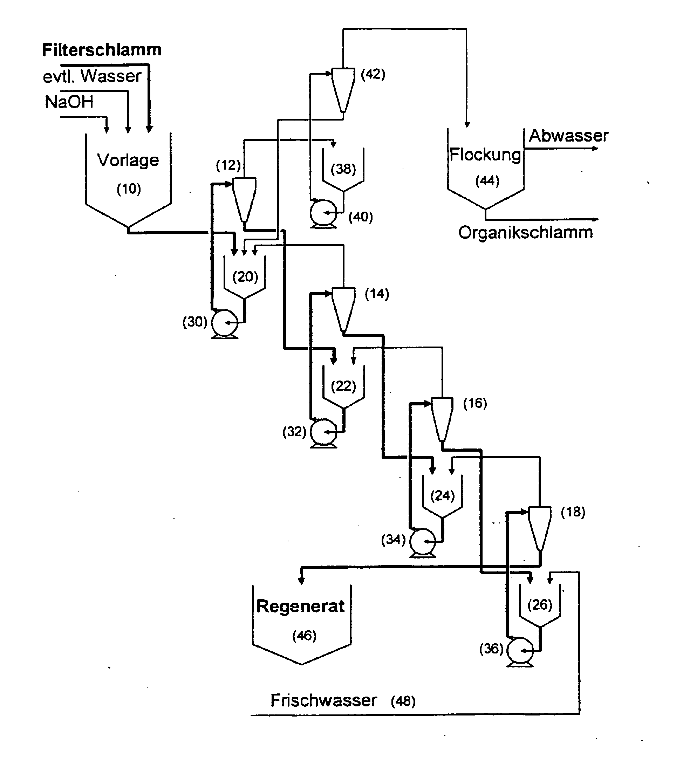

Die einzige Figur zeigt schematisch eine Anlage zur Regenerierung von Kieselgurschlämmen in einer Hydrozyklon-Kaskade.

Einem Konditioniergefäß 10 wird Filterschlamm, insbesondere Kieselgurschlamm, zugeführt sowie eventuell Wasser und Natronlauge, sodass sich ein pH-Wert von etwa 10 einstellt und der Feststoffgehalt etwa 20% beträgt. Dem Konditioniergefäß 10 ist eine Kaskade von Mini-Zyklonen nachgeordnet, die mit 12, 14, 16, 18 bezeichnet sind. Zu jedem Mini-Hydrozyklon mit einem Durchmesser von z.B. 10 mm gehört ein Waschgefäß 20 bzw. 22 bzw. 24 bzw. 26. Eine Pumpe 30 bzw. 32 bzw. 34 bzw. 36 pumpt die Flüssigkeit aus dem jeweiligen Waschgefäß in den jeweiligen Hydrozyklon. Der Überlauf des ersten Hydrozyklons 12 gelangt in ein Gefäß 38, dessen Inhalt über eine Pumpe 40 zu einem weiteren Hydrozyklon 42 gefördert wird. Der Oberlauf gelangt in einen Flockungsbehälter 44 und der Unterlauf zum ersten Waschgefäß 20.

Das aus dem letzten Hydrozyklon 18 abgegebene Regenerat wird in einen Sammeltank 46 gefördert. Dem letzten Waschgefäß wird über 48 Frischwasser mit einer Temperatur von z.B. 80°C zugeführt. Mithin wird das Frischwasser im Gegenstrom zum Regenerat durch den Prozess geführt.

Das Regenerat aus der letzten Hydrozyklonstufe hat z.B. einen Feststoffgehalt von 16% bei einer Temperatur von 80°C. Es wird im geschlossenen Gefäß gelagert, damit es unmittelbar für die Wiederverwendung eingesetzt werden kann. Die Restorganik im Regenerat liegt unter 1%. Es ist möglich, im Gefäß 46 eine gezielte Sedimentation durchzuführen, um eine Grobfraktion zu gewinnen, die beim nächsten Filtrationszyklus zur Voranschwemmung verwendet wird.

Das Gefäß 44 dient als Eindicker. Darin werden durch Ansäuern auf einen pH-Wert von <5 etwa 50% der ausgewaschenen Organik sowie die gleichzeitig im Abwasser verbliebenen Filtermittelanteile ausgeflockt und sedimentiert.

Nachfolgend wird das erfindungsgemäße Verfahren anhand von Beispiel 7 dargestellt und näher erläutert. Die Beispiele 1 bis 5 beziehen sich auf reaktionskinetische Einflüsse, die durch Laborversuche belegt werden. Die Beispiele 5 und 6 zeigen Versuchsergebnisse aus Pilottests. Die Beispiele 8 bis 10 betreffen die Nachbehandlung von Abwasser und Regenerat.

### Beispiel 1:

Ein vorentwässerter Filterschlamm aus der Bierfiltration mit folgender Zusammensetzung:

| | |
|---|---|
| Grobgur | 49,2% |
| Feingur | 18,3% |
| Regenerat (Tremonis) | 17,3% |
| Stabilisierungsmittel (Kieselgel) | 13,7% |
| Faserstoffe (teilw. Cellulose) | 1,5% |

weist ca. 45% Trockenrückstand und 12% Organikanteil (Glühverlust) auf, der Stickstoffgehalt beträgt 1,2%. Die mittlere Korngröße liegt bei 16 µm.

Der Schlamm wird zu einer 10%igen Suspension (4000g) verdünnt, unter Rühren auf 80°C erhitzt und mit NaOH auf einen pH-Wert von 10 eingestellt. Die Suspension wird bei konstanter Temperatur 90 min. sedimentiert, anschließend das überstehende dunkelbraune Abwasser dekantiert. Der Bodensatz (1200g) wird mit einer entsprechenden Menge Frischwasser (2800ml) resuspendiert und der Waschvorgang insgesamt fünfmal wiederholt. Es ergeben sich die in Tabelle 1 dargestellten Glühverluste. Vergleichswerte einer frischen Filtermittelmischung betragen 1 bis 1,5%. Durch Subtraktion dieses "Nullwertes" ergibt sich damit der verbliebene Anteil an Verschmutzungen im Filtermittel (Restorganik).

**Tabelle 1: Verlauf des Reinigungsvorgangs**

| Waschstufe | 0 Aufgabe | 1 | 2 | 3 | 4 | 5 |
|---|---|---|---|---|---|---|
| Glühverlust | 12% | 5,35% | 3,17% | 2,08% | 1,44% | 1,40% |
| Restorganik (ca.) | 10,75% | 4,10% | 1,92% | 0,83% | 0,19% | 0,15% |

Der Gehalt an Stickstoff beträgt nach der 4. Waschstufe nur noch 0,036%, das entspricht einer Reduktion um 97%.

Die Ausbeute der Filtermittel liegt nach der 4. Stufe bei ca. 80%. Das Regenerat hat einen Feststoffgehalt von ca. 29%.

Dieses Waschverfahren wurde mit drei weiteren Filterschlämmen aus verschiedenen Brauereien überprüft; es wurden damit gleichermaßen gute Ergebnisse erzielt.

### Beispiel 2:

Der Filterschlamm aus Beispiel 1 wird wie dort beschrieben 4-stufig gewaschen, dabei wird jedoch der pH-Wert variiert. Es werden die in der Tabelle 2 dargestellten Glühverluste erreicht.

**Tabelle 2: Glühverlust des Regenerats nach 4-stufigem Waschen bei verschiedenen pH-Werten**

| | | | | | | |
|---|---|---|---|---|---|---|
| pH-Wert | 3,5 | 4,5 | 7 | 8,5 | 10 | 11 |
| Glühverlust | 5,11% | 4,88% | 4,03% | 1,95% | 1,44% | 1,50% |

Der Waschversuch bei pH 4,5 erfolgt dabei ohne weitere Konditionierung; dies ist der pH-Wert des gebrauchten Filterschlammes.

Es zeigt sich, dass der Wascherfolg stark pH-abhängig ist. Erst im schwach alkalischen Bereich tritt eine gute Reinigungswirkung auf. Gründe hierfür sind einerseits eine beginnende Hydrolisierung der Organikpartikeln, andererseits eine Verschiebung der Oberflächenladungen (Zeta-Potentiale) der Filtermittel, die eine Wiederanlagerung suspendierter Verschmutzungen und Flockenbildung während der Fest-Flüssig-Trennung verhindert.

### Beispiel 3:

Der Filterschlamm aus Beispiel 1 wird wie dort beschrieben 4-stufig gewaschen, dabei wird jedoch die Waschtemperatur variiert. Es werden die in Tabelle 3 dargestellten Glühverluste erreicht.

**Tabelle 3: Glühverlust des Regenerats nach 4-stufigem Waschen bei verschiedenen Waschtemperaturen**

| | | | | | |
|---|---|---|---|---|---|
| Temperatur | 20°C | 40°C | 50°C | 60°C | 80°C |
| Glühverlust | 2,12% | 1,80% | 1,61% | 1,46% | 1,44% |

Es zeigt sich, dass die Reinigungswirkung mit steigender Temperatur besser wird, ab 60°C wird der geringste Gehalt an Restorganik erzielt. Auch die Absetzeigenschaften werden erwartungsgemäß bei höherer Wassertemperatur besser.

### Beispiel 4:

Der Filterschlamm aus Beispiel 1 wird, wie dort beschrieben, jedoch nur 1-stufig gewaschen, dabei werden zur Fest-Flüssig-Trennung die Sedimentation mit verschiedenen Absetzzeiten (bei 26cm Flüssigkeitshöhe) sowie Hydrozyklone eingesetzt. Es werden die in Tabelle 4 dargestellten Glühverluste und Ausbeuten erreicht.

**Tabelle 4: Ausbeute und Glühverlust nach einer Reinigungsstufe bei Einsatz unterschiedlicher Fest-Flüssig-Trennverfahren**

| Art der Trennung | Sedimentation 45 min | Sedimentation 90 min | Sedimentation 24 h | 10 mm - Hydrozyklon | 20 mm - Hydrozyklon |
|---|---|---|---|---|---|
| Glühverlust | 5,37% | 5,35% | 5,30% | 4,56% | 4,62% |
| Ausbeute | 92% | 96% | 97% | 85% | 66% |

Es zeigt sich, dass durch Sedimentation sehr hohe Ausbeuten erreichbar sind, wenn die Absetzgeschwindigkeit maximal 17 cm/h beträgt. Dies ist durchaus technisch umsetzbar, jedoch nur für kleinere bis mittlere Durchsätze sinnvoll. Bei mehreren hintereinandergeschalteten Waschstufen sind die Verluste entsprechend höher, bei 4 Stufen wurde eine Gesamtausbeute von 82% ermittelt. Tabelle 4 zeigt außerdem, dass noch längere Absetzzeiten nicht zu einer Wiederanlagerung der Verschmutzungen führten.

Der Einsatz von Hydrozyklonen liefert etwas geringere Glühverluste nach der ersten Stufe, was jedoch durch eine höhere Verdünnung (nur 5% Trockensubstanz) begründet ist. Die Ausbeute ist beim Zyklon mit 10 mm Durchmesser gut, beim Zyklon mit 20 mm Durchmesser schon deutlich herabgesetzt. Hier können jedoch die Verluste weiterer Waschstufen durch kontinuierlichen Gegenstrombetrieb sowie eine Nachreinigungsstufe begrenzt werden. Es wurde in einer Anlage mit 4 Wasch- und einer Nachreinigungsstufe (vgl. Beispiel 7) mit 10 mm-Zyklonen eine Gesamtausbeute von 80% erzielt, der Reinigungseffekt (Restorganik) ist dabei ebenso gut wie bei der Sedimentation (siehe Tabelle 1).

### Beispiel 5:

Der Filterschlamm aus Beispiel 1 wird 1-stufig gewaschen, dabei wird jedoch die Filtermittel-(FM-)Konzentration beim Waschen (hier definiert als Massenanteil des Glührückstandes der Suspension) variiert.

Es werden die in Tabelle 5 dargestellten Reinigungseffekte und Ausbeuten erzielt.

**Tabelle 5: Erreichte Glühverluste und Ausbeuten nach 1-stufigem Waschen und Trennung durch 90-minütige Sedimentation sowie durch 10mm-Hydrozyklon bei verschiedenen Filtermittel-Konzentrationen.**

| | | | | | | | |
|---|---|---|---|---|---|---|---|
| FM-Konzentration | 2% | 3% | 5% | 8% | 10% | 20% | 25% |
| Glühverlust Sedimentation | | | 4,78% | | 5,35% | 7,42% | 12%* |
| Ausbeute Sedimentation | | | 97% | | 96% | 84% | 99%* |
| Glühverlust Hydrozyklon | 4,34% | 4,40% | 4,56% | 4,92% | 5,05% | | |
| Ausbeute Hydrozyklon | 87% | 87% | 85% | 79% | 55%** | | |

| | | | | | | | |
|---|---|---|---|---|---|---|---|
| * keine merkliche Sedimentation ** Verstopfungsneigung des Zyklonunterlaufs | | | | | | | |

Es zeigt sich, dass beim Einsatz der Sedimentation FM-Konzentrationen bis 10% sehr gute Ergebnisse liefern. Bis 20% ist jedoch auch noch eine Reinigung möglich, was dann einen höheren Anlagendurchsatz und geringeren Wasserverbrauch ermöglicht, evtl. unter Inkaufnahme höherer Verluste, längerer Absetzzeiten oder zusätzlicher Waschstufen. Die Festlegung eines wirtschaftlichen Betriebspunktes muss innerhalb dieser Grenzen im Einzelfall erfolgen.

Bei Anwendung des Hydrozyklons liegt die optimale FM-Konzentration niedriger; bei über 8% vermindert sich die Ausbeute stark und der Zyklon kann verstopfen. Der erzielte Reinigungseffekt (Glühverlust) ist dagegen kaum von der Konzentration abhängig. Zu geringer Feststoffeinsatz führt zu einem unverhältnismäßig hohen Wasserverbrauch.

### Beispiel 6:

Die technische Anwendbarkeit des Verfahrens wird durch Pilottests belegt.

Eine Filterschlammcharge von beispielsweise 50 kg Trockensubstanz mit der Zusammensetzung aus Beispiel 1 wird in einem Reaktor von beispielsweise 500 1 mit heißem Wasser auf einen FM-Gehalt von 10%, eine Temperatur von 80°C und mit NaOH auf einen pH-Wert von 10 konditioniert sowie einige Minuten durch Rühren gut suspendiert. Die Suspension wird 8 Stunden sedimentiert, anschließend wird die überstehende Flüssigkeit abgezogen, mit heißem Frischwasser wieder aufgefüllt und erneut suspendiert. Bei 4 Waschzyklen steht so nach spätestens 2 Tagen das regenerierte Filtermittel wieder zu Verfügung. Durch Einstellen auf ca. 20% TS und Ansäuern auf pH 5 (vgl. Beispiel 9) bleibt das Regenerat pumpfähig und kann bei 80°C bis zum Wiedereinsatz steril gelagert werden.

### Beispiel 7:

Der Schlamm einer Filtrationscharge wird in einem Vorlagetank auf 20% FM-Konzentration und pH 10 konditioniert. Die Hydrozyklon-Kaskade entsprechend der Abbildung wird mit Frischwasser von 80°C beschickt, anschließend der Schlamm kontinuierlich der ersten Waschstufe zudosiert, sodass sich im System ein Feststoffgehalt von vorzugsweise 5% einstellt. Die Durchsatz-Abstimmung der gekoppelten Waschstufen wird dabei durch eine automatische Regelung der einzelnen Zyklondrücke erreicht. Bei einem Zyklondruck von etwa 3 bar ergibt sich ein Wasserverbrauch von ca. 250 l/h und ein Feststoffdurchsatz von ca. 10 kg/h pro Zyklon.

Es kann, abhängig vom eingesetzten Schlamm sowie der gewünschten Reinheit und Ausbeute, die Zahl der Waschstufen zwischen 2 und 5 sowie die Zahl der Nachreinigungsstufen zwischen 0 und 2 variiert werden.

Eine Anpassung der Anlage auf beliebige Durchsätze ist leicht durch Parallelschaltung identischer Zyklone möglich. Die Regenerierung einer Filtercharge mit beispielsweise 500 kg Trockensubstanz, wie in größeren Brauereien üblich, kann demnach mit je 5 parallel geschalteten Zyklonen bei einer Anlagenlaufzeit von 10 h erfolgen.

Das an der letzten Zyklonstufe anfallende Regenerat wird in einem Sammeltank bei 80°C gelagert, erforderlichenfalls gemäß Beispiel 9 noch weiter eingedickt und angesäuert, um es pumpfähig zu halten. Es kann außerdem gemäß Beispiel 10 im Sammeltank gezielt durch Sedimentation klassiert werden, um verschiedene Fraktionen für den Wiedereinsatz zu erhalten.

Die Reinigungsleistung entspricht bei Einsatz des Schlammes aus Beispiel 1 etwa dem Verlauf in Tabelle 1.

Die Durchlässigkeitswerte des so aus dem Schlamm nach Beispiel 1 mit 4 Wasch- und einer Nachreinigungsstufe erzeugten Regenerates liegen bei 0,6 Darcy mit einer Nassdichte von 310 g/l, das entspricht etwa den Werten einer mittleren Kieselgur. Der Glühverlust des Regenerates liegt mit 1,5% nicht über dem einer vergleichbaren frischen Filtermittelmischung.

### Beispiel 8:

Das Abwasser aus einem Gegenstrom-Waschversuch mit Hydrozyklonen gemäß Beispiel 7 (bei 5% Filtermittel-Konzentration) sowie aus der ersten Waschstufe eines Sedimentationsversuchs gemäß Beispiel 1 (10% FM) wird mit Schwefelsäure versetzt, vorsichtig durchgemischt und im Standzylinder 2 h sedimentiert.

**Tabelle 6: CSB des Abwassers nach einer Vorbehandlung durch Ansäuern**

| | | | | | | | |
|---|---|---|---|---|---|---|---|
| pH-Wert | 10 | 8 | 6 | 5 | 4,5 | 4 | 2 |
| CSB [mg/l] bei 5% FM | 9320 | 9240 | 7850 | 5680 | 5650 | 5390 | 4610 |
| CSB [mg/l] bei 10% FM | 18560 | 18370 | 13610 | 11050 | 9900 | 9530 | 8050 |

Durch Ansäuern des Abwassers auf einen pH-Wert unter 6 tritt eine starke Flockung auf, unter pH 5 werden die Feststoffe praktisch vollständig ausgefällt und der CSB auf etwa 50% des Ausgangswertes reduziert.

### Beispiel 9:

Das Regenerat aus Beispiel 7 weist einen Trockensubstanzgehalt von 16% und einen pH-Wert von 8,5 auf.

Dieses Regenerat wird durch Sedimentation weiter eingedickt, nach 24 h hat sich ein klarer farbloser Überstand gebildet. Dieser weist einen CSB-Wert von unter 10 mg/l auf, was darauf hinweist, dass keine löslichen Verschmutzungen mehr vorhanden sind.

Der Bodensatz hat nun eine stichfeste, sandig-lehmige Konsistenz bei einem TS-Gehalt von 33%. Es kommt teilweise zu einer Entmischung der verschiedenen Bestandteile; Faserstoffe und Grobgur setzen sich bevorzugt ab. Das Regenerat lässt sich nur mit Mühe durch Rühren wieder suspendieren.

Wird das gleiche Regenerat vor der Sedimentation mit Schwefelsäure auf pH 5 eingestellt, bildet sich schnell ein klarer Überstand, der Bodensatz weist jedoch eine leicht flockige Struktur auf bei einem TS-Gehalt von 20% auf. Er bleibt dauerhaft fließ- und pumpfähig.

### Beispiel 10:

Das Regenerat aus der 4. Waschstufe des Waschversuchs nach Beispiel 1 wird mit Wasser auf einen Filtermittel-Gehalt von 20% konditioniert und im Standzylinder 3 min lang sedimentiert, dekantiert und der Überstand anschließend nochmals 90 min sedimentiert. Es werden so die in Tabelle 7 dargestellten Fraktionen gewonnen.

**Tabelle 7: Ergebnis einer Klassierung des Filtermittel-Regenerates durch Sedimentation**

| | Original | Grobfraktion (Rückstand nach 3 min) | Feinfraktion (Überstand nach 3 min) |
|---|---|---|---|
| Massenanteil | 100% | 39% | 61% |
| Glühverlust | 1,44% | 2,97% | 0,52% |
| Durchlässigkeit | 0,5 Darcy | 0,9 Darcy | 0,4 Darcy |

Durch die Klassierung wird eine Grobfraktion gewonnen, die aufgrund ihrer Durchlässigkeit und Menge beispielsweise zur Voranschwemmung für eine neue Filtration eingesetzt werden kann. Der erhöhte Glühverlust ist hier auf grobe organische Filtermittelbestandteile (Cellulosefasern) zurückzuführen.

Die Feinfraktion ist anschließend nach gezielter Ergänzung der Verluste durch Frischmaterial für die laufende Dosierung verwendbar.

Da sowohl die Zusammensetzung der eingesetzten Filtermittelmischung als auch die erforderlichen Fraktionen aufgrund unterschiedlicher Anlagentechnik und Bierqualität in jeder Brauerei variieren, ist hier jeweils eine individuelle Anpassung an die Erfordernisse möglich.

Es sei abschließend bemerkt, dass die obigen Prozentangaben stets Gewichtsprozente bedeuten.

## Patentansprüche

1. Verfahren zur Regenerierung von Filtermitteln, insbesondere Kieselgur, bei dem der aus der Filtrationsstufe entfernte nasse Filterschlamm in einem Vorlagebehälter (10) suspendiert und einem mehrstufigen Waschprozeß unterworfen wird zur Gewinnung eines Filtermittelregenerats, wobei im Vorlagebehälter ein alkalisches Milieu zwischen 8 und 11 pH hergestellt wird, **dadurch gekennzeichnet, daß** durch das schwache alkalische Milieu eine Dispergierung der organischen Verschmutzung bewirkt sowie durch eine Veränderung der Oberflächenladung eine Wiederanlagerung an das Filtermittel verhindert wird und ein Gegenstrom-Waschprozeß in einer aus mindestens zwei hintereinander geschalteten Wasch- und Trennstufen bestehenden Hydrozyklonkaskade mit Waschflüssigkeit im Gegenstrom zum Filterschlamm durchgeführt wird, wobei die Schaltung der Hydrozyklone so vorgenommen wird, daß eine Frischwasserzufuhr in der letzten Stufe der Kaskade erfolgt und der jeweilige Überlauf der einzelnen Stufen jeweils das Waschmedium für das Produkt der jeweils vorhergehenden Stufe bildet, wodurch Produkt und Waschmedium im Gegenstrom geführt werden, wobei als Frischwasser Warmwasser mit einer Temperatur von vorzugsweise 80°C eingesetzt wird, so dass eine Sterilisation des Filtersmittels und der Anlage erreicht wird.

2. Verfahren nach Anspruch 1, **dadurch gekennzeichnet, daß** die Suspension im Vorlagebehälter (10) einen Feststoffgehalt von maximal 20 % aufweist.

3. Verfahren nach Anspruch 1 oder 2, **dadurch gekennzeichnet, daß** die Suspension eine erhöhte Temperatur aufweist.

4. Verfahren nach einem der Ansprüche 1 bis 3, **dadurch gekennzeichnet, daß** die Temperatur des Regenerats aus der letzten Hydrozyklonstufe, dass heisst am Ende des Waschprozesses 60 bis 95 °C, vorzugsweise 80 °C beträgt.

5. Verfahren nach einem der Ansprüche 1 bis 4, **dadurch gekennzeichnet, daß** das Regenerat höchstens 1,5 % Verunreinigungen enthält.

6. Verfahren nach einem der Ansprüche 1 bis 5, **dadurch gekennzeichnet, daß** der zu reinigende Filterschlamm Kieselgur und/oder Stabilisierungsmittel und/oder Perlite und/oder Faserstoffe enthält.

7. Verfahren nach Anspruch 1, **dadurch gekennzeichnet, daß** der Unterlauf des Hydrozyklons der ersten Stufe das Aufgabematerial der nächsten Trennstufe liefert und mit dem Oberlauf des Hydrozyklons der jeweils vorhergehenden Wasch- und Trennstufe der Waschvorgang in der nächsten Stufe erfolgt, so daß nur in der letzten Stufe frische Waschflüssigkeit aufgegeben wird.

8. Verfahren nach einem der Ansprüche 1 bis 7, **dadurch gekennzeichnet, daß** Mini-Hydrozyklone (12, 14, 16, 18) mit einem maximalen Durchmesser von 20 mm verwendet werden.

9. Verfahren nach Anspruch 1 oder 8, **dadurch gekennzeichnet, daß** die Hydrozyklone mit einem Splitverhältnis zwischen 10 und 40 % Unterlauf betrieben werden.

10. Verfahren nach einem der Ansprüche 1 bis 9, **dadurch gekennzeichnet, daß** der Feststoffgehalt in der Hydrozyklon-Kaskade zwischen 2 und 8 % liegt.

11. Verfahren nach einem der Ansprüche 1 bis 10, **dadurch gekennzeichnet, daß** das Regnerat bis zum Wiedereinsatz feucht bei vorzugsweise 80 °C gelagert wird.

12. Verfahren nach einem der Ansprüche 1 bis 11, **dadurch gekennzeichnet, daß** das Regenerat klassiert wird.

13. Verfahren nach einem der Ansprüche 1 bis 12, **dadurch gekennzeichnet, daß** durch Sedimentation des Regenerats eine Grobfraktion gewonnen wird.

14. Verfahren nach einem der Ansprüche 1 bis 13, **dadurch gekennzeichnet, daß** das Regenerat durch Ansäuern auf einen pH-Wert von 2 bis 6, vorzugsweise 4,5 pumpfähig gehalten wird.

15. Verfahren nach einem der Ansprüche 1 bis 14, **dadurch gekennzeichnet, daß** das Regenerat durch Sedimentation auf dosierfähige Feststoffkonzentrationen nacheingedickt wird.

16. Verfahren nach einem der Ansprüche 1 bis 15, **dadurch gekennzeichnet, daß** das Abwasser aus dem Oberlauf des Hydrozyklons der ersten Wasch- und Trennstufe durch mindestens eine einen Mini-Hydrozyklon (42) aufweisende Trennstufe nachgereinigt wird.

17. Verfahren nach einem der Ansprüche 1 bis 16, **dadurch gekennzeichnet, daß** das Abwasser aus der ersten Trennstufe angesäuert und auf einen pH-Wert von vorzugsweise 4,5 eingestellt wird.

18. Verfahren nach einem der Ansprüche 1 bis 17, **dadurch gekennzeichnet, daß** das alkalische Milieu im Vorlagebehälter 10 pH entspricht.

19. Anlage zur Regenerierung von Filtermitteln gemäß der Anspruche 1-18, insbesondere Kieselgur, mit einem Vorlagebehälter (10) für die Suspendierung des aus der Filtrationsstufe entnommenen nassen Filtermittels und mit mindestens zwei hintereinander geschalteten Wasch- und Trennstufen, von denen jede einen Mini-hydrozyklon (12, 14, 16, 18) mit einem maximalen Durchmesser von 20 mm aufweist, und mit einer Frischwasserzufuhr (48), **dadurch gekennzeichnet, daß** jede Trennstufe einen Waschbehälter (20, 22, 24, 26) aufweist, wobei der Waschbehälter (20) der ersten Wasch- und Trennstufe mit dem Vorlagebehälter (10) verbunden ist, der Zulauf jedes Zyklons (12, 14, 16, 18) über eine Pumpe (30, 32, 34, 36) mit einem zugeordneten Waschbehälter (20, 22, 24, 26) verbunden ist, der Unterlauf jedes Zyklons (12, 14, 16, 18) mit dem Waschbehälter (20, 22, 24, 26) des Zyklons der nächstfolgenden Stufe verbunden ist, bis auf den ersten Hydrozyklon (12) der Oberlauf der Zyklone (14, 16, 18) mit dem Waschbehälter (20; 22, 24) der vorausgehenden Wasch- und Trennstufe verbunden ist und der Waschbehälter (26) der letzten Wasch- und Trennstufe mit der Frischwasserzufuhr (48) verbunden ist.

20. Anlage nach Anspruch 19, **dadurch gekennzeichnet, daß** der Oberlauf des Hydrozyklons der ersten Wasch- und Trennstufe (20, 12) mit einer zusätzlichen Wasch- und Trennstufe (38, 42) verbunden ist zur Aufbereitung des Organikschlammes, wobei der Unterlauf des Hydrozyklons (42) der zusätzlichen Wasch- und Trennstufe mit dem Waschbehälter (20) der ersten Wasch- und Trennstufe verbunden und der Oberlauf des Hydrozyklons (42) der zusätzlichen Wasch- und Trennstufe mit einem Flockungsbehälter (44) verbunden ist.

## Claims

1. Method for regenerating filter material, especially diatomaceous earth, in which the wet filter sludge removed from the filtration stage is suspended in a receiving container (10) and subjected to a multi-stage wash process in order to obtain a filter material regenerate, wherein an alkaline environment between 8 and 11 pH is produced in the receiving container, **characterized in that** a dispersion of the organic contamination is caused by the weak alkaline environment and a reattachment on the filter material is prevented and a reverse-flow wash process is performed in a hydrocyclone cascade consisting of at least two series-connected wash and separation stages with wash fluid in the reverse flow of the filter sludge, wherein the switching of the hydrocyclone is performed such that a fresh water supply takes place in the last stage of the cascade and the respective overflow of the individual stages forms the wash medium for the product of each of the previous stages, wherein the product and wash medium are maintained in the reverse flow, wherein warm water, preferably with a temperature of 80° C, is used as the fresh water, so that a sterilization of the filter material and the apparatus is achieved.

2. Method according to claim 1, **characterized in that** the suspension in the receiving container (10) has a maximum solids content of 20%.

3. Method according to claim 1 or 2, **characterized in that** the suspension has an elevated temperature.

4. Method according to one of claims 1 through 3, **characterized in that** the temperature of the regenerate from the last hydrocyclone stage, i.e. at the end of the wash process, is 60 to 95° C, preferably 80° C.

5. Method according to one of claims 1 through 4, **characterized in that** the regenerate contains a maximum of 1.5% impurities.

6. Method according to one of claims 1 through 5, **characterized in that** the filter sludge to be cleaned contains diatomaceous earth and/or stabilization material and/or perlite and/or fibers.

7. Method according to claim 1, **characterized in that** the lower flow of the hydrocyclone of the first stage delivers the material to be fed to the next separation stage and the wash process takes place in the next stage with the upper flow of the hydrocyclone of the respective previous wash and separation stage so that fresh wash fluid is only given in the last stage.

8. Method according to one of claims 1 through 7, **characterized in that** mini-hydrocyclones (12, 14, 16, 18) with a maximum diameter of 20 mm are used.

9. Method according to claim 1 or 8, **characterized in that** the hydrocyclones are operated with a split percentage between 10 and 40% of the lower flow.

10. Method according to one of claims 1 through 9, **characterized in that** the solids content in the hydrocyclone cascade lies between 2 and 8%.

11. Method according to one of claims 1 through 10, **characterized in that** the regenerate is preferable stored moist at 80° C up until reuse.

12. Method according to one of claims 1 through 11, **characterized in that** the regenerate is classified.

13. Method according to one of claims 1 through 11, **characterized in that** a coarse fraction is obtained through sedimentation of the regenerate.

14. Method according to one of claims 1 through 13, **characterized in that** the regenerate is kept pumpable at a pH value of 2 to 6, preferably 4.5, through acidification.

15. Method according to one of claims 1 through 14, **characterized in that** the regenerate is re-thickened to dosable solids concentrations through sedimentation.

16. Method according to one of claims 1 through 15, **characterized in that** the waste water from the upper flow of the hydrocyclone of the first wash and separation stage is re-cleaned by at least one separation stage with a mini-hydrocyclone (42).

17. Method according to one of claims 1 through 16, **characterized in that** the waste water from the first separation stage is acidified and set to a pH value of preferably 4.5.

18. Method according to one of claims 1 through 17, **characterized in that** the alkaline environment in the receiving container is 10 pH.

19. Apparatus for regenerating filter material, especially diatomaceous earth, with a receiving container (10) for the suspending of the wet filter material removed from the filtration stage and with at least two series-connected wash and separation stages, each of which has a mini-hydrocyclone (12, 14, 16, 18) with a maximum diameter of 10 mm, and with a fresh water supply (48), **characterized in that** each separation stage has a wash tank (20, 22, 24, 26), wherein the wash tank (20) of the first wash and separation stage is connected with the receiving container (10), the inlet of each cyclone (12, 14, 16, 18) is connected with an associated wash tank (20, 22, 24, 26) via a pump (30, 32, 34, 36), the lower flow of each cyclone (12, 14, 16, 18) is connected with the wash tank (20, 22, 24, 26) of the cyclone of the next stage, the upper flow of the cyclones (14, 16, 18) is connected with the wash tank (20, 22, 24) of the previous wash and separation stage except for the first hydrocyclone (12) and the wash tank (26) of the last wash and separation stage is connected with the fresh water supply (48).

20. Apparatus according to claim 19, **characterized in that** the upper flow of the hydrocyclone of the first wash and separation stage (20, 12) is connected with an additional wash and separation stage (38, 42) for preparing the organic sludge, wherein the lower flow of the hydrocyclone (42) of the additional wash and separation stage is connected with the wash tank (20) of the first wash and separation stage and the upper flow of the hydrocyclone (42) of the additional wash and separation stage is connected with a flocculation tank (44).

## Revendications

1. Procédé de régénération d'auxiliaires de filtration, en particulier une terre d'infusoires, dans lequel la boue de filtration enlevée de l'étage de filtration est mise en suspension dans une cuve de réception (10), et est soumise à un processus de lavage à plusieurs étages pour l'obtention d'un produit de régénération d'auxiliaires de filtrage, un milieu alcalin avec un pH entre 8 et 11 étant produit dans la cuve de réception, **caractérisé en ce que**, sous l'action du milieu alcalin faible, une dispersion de l'impureté organique est produite, et **en ce que**, sous l'action d'une modification du chargement superficiel, une refixation sur l'auxiliaire de filtration est empêchée, et **en ce qu'**un processus de lavage à contre-courant dans une cascade d'hydrocyclones composée d'au moins deux étages de lavage et de séparation montés l'un derrière l'autre est effectué avec du liquide de lavage à contre-courant par rapport à la boue de filtration, le montage des hydrocyclones étant entrepris de sorte qu'un apport d'eau fraîche survient dans le dernier étage de la cascade, et le trop-plein respectif des différents étages formant respectivement l'agent de lavage pour le produit de l'étage respectivement précédent, ce qui fait que le produit et l'agent de lavage sont conduits à contre-courant, l'eau fraîche utilisée étant de l'eau chaude à une température de 80°C de préférence, de sorte qu'une stérilisation de l'auxiliaire de filtration et de l'installation est obtenue.

2. Procédé selon la revendication 1 ou 2, **caractérisé en ce que** la suspension dans la cuve de réception (10) présente une teneur en matières solides de 20 % maximum.

3. Procédé selon la revendication 1 ou 2, **caractérisé en ce que** la suspension présente une température accrue.

4. Procédé selon une des revendications 1 à 3, **caractérisé en ce que** la température du produit de régénération provenant du dernier étage d'hydrocyclones, c'est-à-dire la température à la fin du processus de lavage est de 60 à 95 °C, de préférence 80 °C.

5. Procédé selon une des revendications 1 à 4, **caractérisé en ce que** le produit de régénération contient au maximum 1,5% d'impuretés.

6. Procédé selon une des revendications 1 à 5, **caractérisé en ce que** la boue de filtration à nettoyer contient de la terre d'infusoires et/ou des agents stabilisants et/ou des perlites et/ou des matières fibreuses.

7. Procédé selon la revendication 1, **caractérisé en ce que** le courant inférieur de l'hydrocyclone du premier étage fournit le matériau d'alimentation de l'étage de séparation suivant, et **en ce que** le processus de lavage intervient à l'étage suivant avec le courant supérieur de l'hydrocyclone de l'étage de lavage et de séparation respectivement précédent, de sorte que du liquide de lavage frais n'est fourni qu'au dernier étage.

8. Procédé selon une des revendications 1 à 7, **caractérisé en ce que** des mini-hydrocyclones (12, 14, 16, 18) d'un diamètre maximal de 20 mm sont utilisés.

9. Procédé selon la revendication 1 ou 8, **caractérisé en ce que** des hydrocyclones sont mis en oeuvre avec un rapport de dissociation entre 10 et 40 % de courant inférieur.

10. Procédé selon une des revendications 1 à 9, **caractérisé en ce que** la teneur en matières solides dans la cascade d'hydrocyclones est comprise entre 2 et 8%.

11. Procédé selon une des revendications 1 à 10, **caractérisé en ce que** le produit de régénération est, jusqu'à la réutilisation, entreposé humide de préférence à une température de 80 °C.

12. Procédé selon une des revendications 1 à 11, **caractérisé en ce que** le produit de régénération est criblé.

13. Procédé selon une des revendications 1 à 12, **caractérisé en ce qu'**une fraction grossière est obtenue par sédimentation du produit de régénération.

14. Procédé selon une des revendications 1 à 13, **caractérisé en ce que** le produit de régénération est maintenu apte au pompage par acidification à un pH de 2 à 6, de préférence de 4,5.

15. Procédé selon une des revendications 1 à 14, **caractérisé en ce que** le produit de régénération est épaissi après coup, par sédimentation, à des concentrations de matières solides dosables.

16. Procédé selon une des revendications 1 à 3, **caractérisé en ce que** les eaux usées en provenance du courant supérieur de l'hydrocyclone du premier étage de lavage et de séparation sont nettoyées après coup par au moins un étage de séparation présentant un mini-hydrocyclone (42).

17. Procédé selon une des revendications 1 à 16, **caractérisé en ce que** les eaux usées en provenance du premier étage de séparation sont acidifiées et réglées à un pH de 4,5 de préférence.

18. Procédé selon une des revendications 1 à 17, **caractérisé en ce que** le milieu alcalin dans la cuve de réception correspond à un pH 10.

19. Installation de régénération d'auxiliaires de filtration selon les revendications 1 à 18, en particulier de terre d'infusoires, avec une cuve de réception (10) pour la mise en suspension de l'auxiliaire de filtration humide prélevé dans l'étage de filtration et avec au moins deux étages de lavage et de séparation montés l'un derrière l'autre, dont chacun présente un mini-hydrocyclone (12, 14, 16, 18) d'un diamètre maximal de 20 mm et avec une alimentation d'eau fraîche (48), **caractérisée en ce que** chaque étage de séparation présente une cuve de lavage (20, 22, 24, 26), la cuve de lavage (20) du premier étage de lavage et de séparation étant raccordée à la cuve de réception (10), l'alimentation de chaque cyclone (12, 14, 16, 18) étant raccordée, par le biais d'une pompe (30, 32, 34, 36), à une cuve de lavage (20, 22, 24, 26) subordonnée, le courant inférieur de chaque cyclone (12, 14, 16, 18) étant raccordé à la cuve de lavage (20, 22, 24, 26) du cyclone de l'étage qui suit immédiatement, le courant supérieur des cyclones (14, 16, 18), à l'exception du premier hydrocyclone (12), étant raccordé à la cuve de lavage (20, 22, 24) de l'étage de lavage et de séparation précédent, et la cuve de lavage (26) du dernier étage de lavage et de séparation étant raccordée à l'alimentation d'eau fraîche (48).

20. Installation selon la revendication 19, **caractérisée en ce que** le courant supérieur de l'hydrocyclone du premier étage de lavage et de séparation (20, 12) est raccordé à un étage de lavage et de séparation (38, 42) supplémentaire pour le traitement de la boue organique, le courant inférieur de l'hydrocyclone (42) de l'étage de lavage et de séparation supplémentaire étant raccordé à la cuve de lavage (20) du premier étage de lavage et de séparation, et le courant supérieur de l'hydrocyclone (42) de l'étage de lavage et de séparation supplémentaire étant raccordé à une cuve de floculation (44).
